# EUROPÄISCHE PATENTSCHRIFT

(11) **EP 0 414 085 B1**
(45) Veröffentlichungstag und Bekanntmachung des Hinweises auf die Patenterteilung: **20.04.1994**
(21) Anmeldenummer: 90115466.6
(22) Anmeldetag: 11.08.1990
(51) Int. Cl.: C08F 299/06, C08F 220/36

(54) **Grenzflächenaktive Copolymere und ihre Verwendung zur Herstellung von Polyurethanpulvern**
Surface-active copolymers and their use in the preparation of polyurethane powders
Copolymères tensioactifs et leur utilisation dans la préparation de poudres de polyuréthane

(30) Priorität: 25.08.1989 DE 3928150
(43) Veröffentlichungstag der Anmeldung: 27.02.1991
(73) Patentinhaber: BAYER AG, 51368 Leverkusen (DE)
(72) Erfinder: Hassel, Tillmann, Dr., D-5000 Köln 80 (DE); Müller, Hanns Peter, Dr., D-5060 Bergisch Gladbach 2 (DE); Vernaleken, Hugo, Dr., D-4150 Krefeld 1 (DE); Kipphardt, Helmut, Dr., D-2000 Hamburg 14 (DE); Dhein, Rolf, Dr., D-4150 Krefeld 1 (DE)

(56) Entgegenhaltungen:
- EP-A- 0 041 871
- EP-A- 0 071 405
- GB-A- 2 161 168
- US-A- 4 447 563
- US-A- 4 480 079

## Beschreibung

Die Erfindung betrifft neue grenzflächenaktive Polymere und ihre Verwendung zur direkten Herstellung von Polyurethanpulvern aus den Komponenten in organischer Trägerphase.

Polyurethanpulver und ihre technische Verwendung sind bekannt. Die Pulver werden gewöhnlich aufwendig durch Mahlung entsprechender Granulate hergestellt. Wesentlich rationeller ist die direkte Synthese der Pulver aus den Komponenten in organischer Trägerphase nach den Methoden der Suspensionspolymerisation, wobei die besten Resultate dann erhalten werden, wenn man als Tragerphase aliphatische und/oder alicyclische Kohlenwasserstoffe einsetzt.

Zur Durchführung dieser Direktsynthese sind grenzflächenaktive Hilfsstoffe essentiell. Die Hilfsstoffe haben die Aufgabe, die Reaktionskomponenten in feinzerteilte Emulsionen zu bringen und das sich bildende Polyurethan bis zum Reaktionsende in Emulsion bzw. Suspension zu halten.

In der DE-A-2 816 170 werden spezielle Polyoxyalkylenpolydimethylsiloxan-pfropf- bzw. -block-copolymere als grenzflächenaktive Hilfsstoffe für die direkte Synthese von Polyurethanpulvern in einer Tragerphase aus aliphatischen Kohlenwasserstoffen vorgeschlagen. Polydimethylsiloxan-haltige Polymere sind jedoch für PU-Anwendungen in der Regel nicht günstig, da sie leicht zu Oberflächenstörungen der Formkörper und Schwierigkeiten bei der Lackierung führen, so daß man peinlich darauf achten muß, diese Hilfsstoffe möglichst quantitativ aus dem Pulver zu entfernen. In der DE-A-2 456 927 werden als grenzflächenaktive Hilfsstoffe zur direkten Herstellung von Polyurethanpulvern nach den Methoden der Suspensionspolymerisation in einer aliphatischen Kohlenwasserstoff-Trägerphase Block- bzw. Pfropf-copolymere aus Polylactonen und langkettigen Alkylestern der (Meth)acrylsäure sowie entsprechende Produkte aus Polyoxyalkylenglykolen und langkettigen Alkylestern der (Meth)acrylsäure beschrieben. Diese Hilfsstoffe haben den Nachteil, daß sie OH-funktionell sind und damit in das hergestellte Polyurethan eingebaut werden, was zur Veränderung der mechanischen Eigenschaften der Produkte führen kann und außerdem die erneute Verwendung der Hilfsstoffe unmöglich macht.

In DE-A-2 556 945, 2 559 769, 2 442 085 sowie US-A-4 032 516 und 3 787 525 werden Copolymere aus N-Vinyl-Pyrrolidon und langkettigen α-Olefinen als grenzflächenaktive Hilfsstoffe für die direkte Synthese von PU-Pulvern in einer Kohlenwasserstoff-Trägerphase eingesetzt. Diese Hilfsstoffe sind nicht einbaubar, werden aber schwer von der Oberfläche der gebildeten Pulver desorbiert, so daß zur Rückgewinnung der Hilfsstoffe aufwendige Waschoperationen erforderlich sind.

Aufgabe der vorliegenden Erfindung war es, verbesserte Copolymere zur Verfügung zu stellen. Weiterhin war es Aufgabe der Erfindung, ein Verfahren zur direkten Herstellung von Polyurethanpulvern zur Verfügung zu stellen, welches zu feinteiligen Polyurethandispersionen führt und bei dem die verwendeten Emulgatoren nach der Bildung der Pulver leicht entfernt werden können.

Gegenstand der Erfindung sind grenzflächenaktive Copolymere mit im wesentlichen linearer Struktur, erhältlich durch Copolymerisation von
A) einem partiellen Umsetzungsprodukt aus A1) (Meth)acrylsäure bzw. einem Derivat davon und A2) einer makromolekularen Verbindung, die mit wenigstens zwei funktionellen Gruppen, ausgewählt aus OH und NH₂ substituiert ist, wobei die nicht mit A1) umgesetzten funktionellen Gruppen irreversibel blockiert sind
mit
B) einem Urethan aus einem langkettigen Alkylisocyanat B1) und einem Hydroxyalkyl-(meth)acrylsäureester B2).

Die derart hergestellten grenzflächenaktiven Copolymere sind nicht einbaubar, liefern unter vergleichbaren Synthesebedingungen Polyurethanpulver geringerer Korngröße als die bekannten N-Vinylpyrrolidon-α-olefin-copolymere und werden nach Reaktionsende leicht und nahezu quantitativ vom Polyurethanpulver desorbiert, so daß die Pulver nicht gewaschen werden müssen.

Sowohl die Grenzflächenaktivität als auch die leichte Desorbierbarkeit der erfindungsgemäßen grenzflächenaktiven Hilfsstoffe ist überraschend, denn die bekannten grenzflächenaktiven Hilfsstoffe zur direkten Synthese von PUR-Pulvern, wie Polyether-polydimethylsiloxane (DE-A-2 816 170) und N-Vinylpyrrolidon-α-olefin-copolymere (DE-A-2 556 945, 2 559 769, 2 442 085, US-A-4 032 516 und 3 787 525) sind in den von der Kohlenwasserstoffträgerphase solvatisierten Molekülteilen völlig unpolar, die Pfropf-copolymere der DE-A-2 456 927 tragen in den von der Trägerphase solvatisierbaren Bereichen neben den langkettigen Alkylgruppen nur mäßig polare Estergruppen.

Im Gegensatz dazu weisen die erfindungsgemäßen grenzflächenaktiven polymeren Hilfsstoffe selbst in den von der externen Phase solvatisierten Molekülbereichen nicht nur Estergruppen, sondern zusätzlich in hoher Konzentration hochpolare, zur Waserstoffbrückenbindung fähige Urethanfunktionen auf. Es war für den Fachmann nicht vorauszusehen, daß auch derartige Stoffe für den erfindungsgemäßen Verwendungszweck hervorragend geeignet sind.

Weiterhin ist die leichte Desorbierbarkeit der erfindungsgemäßen Hilfsstoffe vom gebildeten PUR-Pulver völlig unerwartet. Es war im Gegenteil anzunehmen, daß diese Stoffe vom PUR-Pulver sehr stark adsorbiert werden, da sie nicht nur mit dem Weichsegment des Polyurethans assoziieren können, sondern wegen ihres Urethangehalts zusätzlich über Wasserstoffbrücken an die Hartsegmente des Polyurethans gebunden werden können.

In einer bevorzugten Ausführungsform handelt es sich bei den makromolekularen Verbindungen A2) um Makropolyole, insbesondere Makrodiole. Besonders bevorzugte Makropolyole sind Verbindungen mit im Durchschnitt mindestens 1,8 gegenüber Isocyanaten reaktionsfähigen Wasserstoffatomen von einem Molekulargewicht in der Regel von 400 bis 10.000. Hierunter versteht man Hydroxylgruppen aufweisende Verbindungen, insbesondere zwei bis acht Hydroxylgruppen aufweisende Verbindungen, speziell solche vom Molekulargewicht 450 bis 6.000, vorzugsweise 600 bis 4.500, z.B. mindestens zwei, in der Regel zwei bis acht, vorzugsweise aber zwei bis vier, Hydroxylgruppen aufweisende Polyester, Polyether, Polythioether, Polylactone, Polycarbonate, Polyestercarbonate, Polyethercarbonate, Polyacetale und Polyesteramide. Erfindungsgemäß besonders vorteilhaft ist es, zur Herstellung der Hilfsstoffe Makropolyole mit einer OH-Funktionalität von zwei zu verwenden. Dadurch werden lineare Produkte erhalten.

Entsprechend verwendbare Polyesterdiole sind z.B. Umsetzungsprodukte von zweiwertigen Alkoholen und zweiwertigen Carbonsäuren. Die Dicarbonsäuren können aliphatischer, cycloaliphatischer, aromatischer und/oder heterocyclischer Natur sein und gegebenenfalls substituiert sein. Sie können auch in Form von Derivaten, wie Anhydriden und Estern, zur Umsetzung mit zweiwertigen Alkoholen eingesetzt werden. Auch Monohydroxy-monocarbonsäuren sind zum Aufbau der Polyesterdiole verwendbar.

Als Beispiele für solche Carbonsäuren und deren Derivate seien genannt:
Bernsteinsäure, Adipinsäure, Korksäure, Azelainsäure, Sebacinsäure, Phthalsäure, Isophthalsäure Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Hydroxy-capronsäure, Terephthalsäuredimethylester und Terephthalsäure-bis-glykolester.

Als zweiwertige Alkohole kommen z.B. Ethylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, ferner Diethylenglykol, Triethylenglykol, Tetraethylenglykol und höhere Polyethylenglykole, Dipropylenglykol und höhere Polypropylenglykole sowie Dibutylenglykol und höhere Polybutylenglykole in Frage.

Auch die erfindungsgemäß vorteilhaft verwendbaren Polyetherdiole sind solche der an sich bekannten Art und werden z.B. durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von Lewis-Katalysatoren wie BF₃, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Diole, primäre Amine, z.B. Ethylenglykol, Propylenglykol-(1,3) oder -(1,2), 4,4′-Dihydroxy-diphenylpropan, Anilin, Methylamin hergestellt. Vielfach sind solche Polyether bevorzugt, die überwiegend (bis zu 90 Gew-%, bezogen auf alle vorhandenen OH-Gruppen im Polyether) primäre OH-Gruppen aufweisen. Auch OH-Gruppen aufweisende Polybutadiene sind erfindungsgemäß geeignet.

Unter den Polythioetherdiolen seien insbesondere die Kondensationsprodukte von Thiodiglykol mit sich selbst und/oder mit anderen Glykolen, Dicarbonsäuren, Formaldehyd und/oder Aminocarbonsäuren angeführt. Je nach den Co-Komponenten handelt es sich bei den Produkten z.B. um Polythiomischether-, Polythioetherester- oder Polythioetheresteramiddiole. Unter Polylactondiolen sind Produkte zu verstehen, die man erhält, wenn man eine ringöffnende Polymerisation eines Monolactons unter Verwendung eines der bereits erwähnten Diole als Starter durchführt. Geeignete Lactone sind beispielsweise Butyrolacton und ε-Caprolacton.

Polycarbonatdiole sind solche der an sich bekannten Art, wie sie z.B. durch Umsetzung von Diolen wie Propandiol-(1,3), Butandiol-(1,4) und/oder Hexandiol-(1,6), Diethylenglykol, Triethylenglykol, Tetraethylenglykol oder Thiodiglykol mit Diarylcarbonaten, z.B. Diphenylcarbonat oder Phosgen hergestellt werden können (DE-A-1 694 080, 1 915 908 und 2 221 751; DE-OS-2 605 024). Wenn für diese Umsetzung anstelle der Diole kurzkettige Polyetherdiole oder Polyesterdiole verwendet werden, entstehen Polyethercarbonat- bzw. Polyestercarbonatdiole.

Als Polyacetaldiole kommen z.B. die aus Glykolen, wie Diethylenglykol, Triethylenglykol, 4,4′-Dioxethoxydiphenyldimethylmethan, Hexandiol und Formaldehyd herstellbaren Verbindungen in Frage. Auch durch Polymerisation cyclischer Acetale wie z.B. Trioxan (DE-OS-1 694 128) lassen sich erfindungsgemäß geeignete Polyacetaldiole herstellen. Zu den Polyesteramid- und Polyamiddiolen zählen z.B. die aus zweiwertigen gesättigten Carbonsäuren bzw. deren Anhydriden und zweiwertigen gesättigten Aminoalkoholen, Diaminen und deren Mischungen gewonnenen, linearen Kondensate.

Es ist auch möglich als makromolekulare Verbindungen A2) Makropolyamine, insbesondere Makrodiamine, zu verwenden. Derartige Makropolyamine können beispielsweise aus Polyetherpolyolen gemäß DAS 1 215 373 durch direkte Umsetzung mit Ammoniak hergestellt werden. Man kann aber auch die Makropolyole mit Diisocyanaten, bevorzugt aromatischen Diisocyanaten in Isocyanat-Prepolymere überführen und diese Prepolymere zu den aminoterminierten Verbindungen hydrolysieren.

Besonders bevorzugte Verbindungen A2) sind:
Polyesterdiole, Polyamiddiole, Polyetherdiole, Polythioetherdiole, Polylactondiole, Polycarbonatdiole, Polyethercarbonatdiole, Polyacetaldiole und Polyamiddiole.

Erfindungsgemäß werden die funktionellen Gruppen der Verbindungen A2) partiell, insbesondere durch Veretherung, Veresterung mit Monocarbonsäuren oder Urethanisierung mit monofunktionellen Isocyanaten irreversibel blockiert, wobei vorzugsweise keine polymerisierbaren Doppelbindungen in der blockierten Verbindung A2) vorliegen. Der verbleibende Anteil wird in (Meth)acrylsäureester- bzw. Amidfunktionen überführt. Das erhaltene Umsetzungsprodukt A erhält so keine NCO-reaktiven Gruppen mehr.

Die partielle Veretherung von A2) ist nach bekannten Methoden, beispielsweise durch Williamsonsche Ethersynthese oder durch Umsetzung mit Alkyltosylaten möglich. Speziell bei Polyether- und Polyethercarbonatdiolen kann man die partielle Endgruppenblockierung bereits bei deren Synthese leicht dadurch vornehmen, daß man die entsprechende Menge eines monofunktionellen Alkohols im Startergemisch einsetzt. Die Struktur des Alkylrestes der so erzeugten Etherendgruppen kann prinzipiell beliebig gewählt werden, in der Regel handelt es sich jedoch um kurzkettige unverzweigte Alkylreste.

Zur partiellen Veresterung der Hydroxylfunktionen von A2) werden ebenfalls bekannte Methoden, beispielsweise die Acylierung mit Säurechloriden von Monocarbonsäuren in Lösung oder Umesterungsreaktionen in Substanz, wie die Umsetzung mit beispielsweise Phenylestern von Monocarbonsäuren unter Abspaltung von Phenol verwendet. Speziell bei Polyesterdiolen kann die partielle Einführung der Esterendgruppen bereits bei deren Synthese dadurch erfolgen, daß man in das Reaktionsgemisch entsprechende Mengen monofunktioneller Alkohole oder monofunktioneller Carbonsäuren einsetzt.

Entsprechend kann bei Polylactondiolen dem zum Start der Lactonpolymerisation verwendeten Diol die gewünschte Menge eines monofunktionellen Alkohols zugesetzt werden.

Bei derartigen Synthesen erhält man Esterendgruppen, deren endständiger Alkylrest entweder aus dem eingesetztem Alkohol oder aus der Monocarbonsäure stammt. Für die Struktur der endständigen Alkylreste gilt das bereits für Etherendgruppen Gesagte.

Zur partiellen Urethanisierung mit Monoisocyanaten wird A2) in Substanz oder in Lösung unter bekannten Reaktionsbedingungen mit der gewünschten Menge dieser Monoisocyanate umgesetzt. Verwendbar sind alle aliphatischen und aromatischen Monoisocyanate, bevorzugt werden aromatische Monoisocyanate, unter diesen besonders Phenylisocyanat.

Der prozentuale Anteil der derart blockierten funktionellen Gruppen von A2) kann zwischen 20 und 70 % liegen, besonders wirksame Hilfsstoffe erhält man dann, wenn man bei den zu deren Synthese eingesetzten Makrodiolen 30 bis 60 %, bevorzugt 40 bis 50 %, aller vorhandenen OH-Gruppen wie beschrieben blockiert.

Die Überführung der verbliebenen funktionellen Gruppen, insbesondere OH-Gruppen in (Meth)acrylesterfunktionen bzw. der NH₂-Gruppen in Amidfunktionen gelingt ebenfalls nach bekannten Methoden durch Umsetzung mit A1) wie Acylierung mit (Meth)acryloylchlorid in Lösung oder Umesterung mit beispielsweise (Meth)acrylsäurephenylester in Substanz unter Abspaltung von Phenol. Man kann die beschriebenen Acylierungsreaktionen sukzessive durchführen, es ist aber auch möglich, die Makrodiole in einer Eintropfreaktion mit aktivierten Monocarbonsäurederivaten und aktivierten (Meth)acrylsäurederivaten gleichzeitig umzusetzen.

Die Überführung von Hydroxylgruppen von A2) in (Meth)acrylsäureester-Endgruppen ist selbstverständlich auch dadurch möglich, daß man sie mit einem eine (Meth)acrylesterfunktion aufweisenden Monoisocyanat, wie beispielsweise Isocyanatoethylmethacrylat, zum Urethan umsetzt.

Nach diesen Methoden erhält man erfindungsgemäß geeignete OH-freie modifizierte Makrodiole, die über ihre (Meth)acrylsäurester-Endgruppen nach üblichen Methoden (Houben-Weyl: Methoden der organischen Chemie; Band E 20; S. 1141 bis 1176, Thieme Stuttgart 1987) mit Urethanen aus langkettigen monofunktionellen Alkylisocyanaten und Hydroxyalkyl-(meth)acrylaten zu den erfindungsgemäßen polymeren Hilfsstoffen copolymerisiert werden. Ein alternativer Weg zu den gleichen Produkten besteht darin, daß man die Makrodiole zuerst mit entsprechenden (Meth)acrylsäurederivaten in der beschriebenen Weise partiell umsetzt, die erhaltenen OH-haltigen Produkte erfindungsgemäß mit (Meth)acrylurethanen copolymerisiert und erst danach die Hydroxylfunktion wie beschrieben verschließt. Schließlich kann man auch Hydroxyalkyl(meth)acrylate als Komponente im Startergemisch für Polyether- und Polylactondiolsynthesen einsetzen und die so erhaltenen acrylatmodifizierten Polyether und Polylactone erfindungsgemäß mit (Meth)acrylurethanen copolymerisieren, wobei die noch vorhandenen Hydroxylfunktionen vor oder nach der Copolymerisation wie beschrieben blockiert werden.

Zur Copolymerisation geeignete Urethane B werden durch Umsetzung von OH-monofunktionellen (Meth)acrylsäurehydroxyalkylestern mit monofunktionellen Alkylisocyanaten erhalten.

Geeignete Hydroxyalkylester B2) zur Herstellung dieser Urethane sind beispielsweise Acrylsäure-2-hydroxyethylester, Acrylsäure-2-hydroxypropylester, Acrylsäure-4-hydroxybutylester, Acrylsäure-6-hydroxyhexylester, sowie vorzugsweise die entsprechenden Methacrylsäureester. Die Alkoholkomponente dieser beispielhaft erwähnten Hydroxyalkylester leitet sich von - gegebenenfalls verzweigten - aliphatischen C₂ bis C₁₀-Diolen ab. Bevorzugt werden Ester wie Methacrylsäure-2-hydroxyethylester und Methacrylsäure-4-hydroxybutylester verwendet, deren Alkoholkomponente sich von C₂ und C₄-Diolen ableitet.

Geeignete Monoisocyanate B1) zur Herstellung dieser Urethane leiten sich von - gegebenenfalls verzweigten - aliphatischen Monoaminen ab, deren Kohlenstoffkette 6 bis 30, bevorzugt 10 bis 20, besonders bevorzugt 18, Kohlenstoffatome umfaßt.

Beispiele für solche Isocyanate sind 2-Ethyl-hexylisocyanat, Decylisocyanat, Dodecylisocyanat, Tetradecylisocyanat, Hexadecylisocyanat, Stearylisocyanat, Eicosylisocyanat und Tetraeicosylisocyanat. Bevorzugt sind Isocyanate wie Decylisocyanat, Palmitylisocyanat, Myristylisocyanat und Stearylisocyanat. Diese Isocyanate können auch als Gemische eingesetzt werden.

Bevorzugte Verbindungen B sind erhältlich aus: Mono(meth)acrylsäurestern B2) von - gegebenenfalls verzweigten - aliphatischen C₂ bis C₁₀-Diolen, bevorzugt C₂ und C₄-Diolen und - gegebenenfalls verzweigten - aliphatischen C₆ bis C₃₀-Monoisocyanaten, bevorzugt C₁₀ bis C₂₀-Monoisocyanaten, besonders bevorzugt C₁₈-Monoisocyanaten als Verbindung B1).

Vorzugsweise besitzt die Komponente A eine Affinität zum Weichsegment des zu synthetisierenden Polyurethanpulvers, während die langkettigen Alkylreste der Komponente B den Kontakt zur Kohlenwasserstoffträgerphase vermitteln. Die Dispergiereigenschaften der erfindungsgemäßen Copolymeren können durch das Gewichtsverhältnis von A und B eingestellt werden. Erfindungsgemäß geeignete Copolymere erhält man bereits, wenn nur 5 Gew.-% der Komponente A entsprechen. Andererseits sind auch solche Copolymere geeignet, bei denen 2/3 ihrer Masse der Komponente A entstammt. Günstiger ist es jedoch, die Gewichtsverhältnisse von A und B anzunähern, beispielsweise zwischen 0,5 zu 1 und 1,5 zu 1, insbesondere auf 1:1, einzustellen.

Besonders bevorzugte Copolymere enthalten wiederkehrende Einheiten aus folgenden polymerisierten Comonomeren I und II: 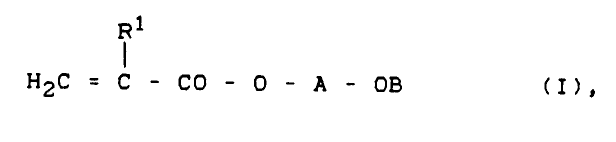
worin bedeuten
- R¹: H, CH₃,
- A: Rest eines Diols mit einem Molekulargewicht von 400 bis 10.000 nach Entfernung der endständigen OH-Gruppen,
- B: Rest eines Blockierungsmittels, insbesondere 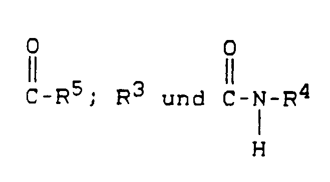
worin bedeuten
- R⁵ und R³: ein gegebenenfalls verzweigter aliphatischer Alkylrest mit 1 bis 6 C-Atomen,
- R⁴: ein gegebenenfalls verzweigter aliphatischer, cycloaliphatischer oder aromatischer Rest mit 1 bis 6 C-Atomen
und 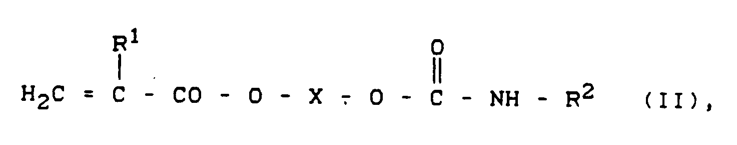
worin bedeuten
- R¹: H, CH₃,
- X: ein gegebenenfalls verzweigter aliphatischer Alkylrest mit 2 bis 10, insbesondere 2 bis 4 C-Atomen,
- R²: ein gegebenenfalls verzweigter aliphatischer Alkylrest mit 6 bis 30, bevorzugt 10 bis 20, insbesondere 18 C-Atomen.

Abhängig von der Polymerisationsmethode können diese wiederkehrenden Einheiten statistisch oder blockartig im Copolymer verteilt sein.

Gegenstand der Erfindung ist weiterhin ein Verfahren zur direkten Herstellung von Polyurethanpulvern in feinverteilter Form durch Umsetzung von Polyisocyanaten und isocyanatreaktiven Verbindungen in einer Trägerphase unter Verwendung von grenzflächenaktiven Verbindungen, dadurch gekennzeichnet, daß als grenzflächenaktive Verbindung ein erfindungsgemäßes Copolymer verwendet wird.

Die erfindungsgemäßen Copolymeren erlauben die direkte Herstellung von Polyurethanpulvern aus Polyisocyanaten, Makropolyolen, Makropolyaminen, Kettenverlängerern, sowie gegebenenfalls Kettenreglern und weiteren Hilfs- und Zusatzstoffen in aliphatischer und/oder alicyclischer Kohlenwasserstoff-Trägerphase, wenn sie dem System zugesetzt werden.

Geeignet für diese Synthese sind grundsätzlich alle bekannten aromatischen, alicyclischen und aliphatischen Polyisocyanate, zur Synthese linearer Produkte werden jedoch speziell Diisocyanate der Formel Q (NCO)₂ verwendet, in welcher Q für einen aromatischen Kohlenwasserstoffrest mit 6 bis 15 Kohlenstoffatomen, für einen aliphatischen Kohlenwasserstoffrest, einen cycloaliphatischen oder einen gemischt aliphatisch/cycloaliphatischen Kohlenwasserstoffrest mit 2 bis 15 Kohlenstoffatomen steht. Beispiele solcher Diisocyanate sind Toluylendiisocyanat, Naphthylendiisocyanat, Diphenylmethandiisocyanat, Hexamethylendiisocyanat, Isophorondiisocyanat, Cyclohexan-1,4-diisocyanat und Perhydrodiphenylmethandiisocyanat. Diese Isocyanate können auch als Gemische verwendet werden.

Als Makropolyole können die oben bereits beschriebenen Polyester-, Polyether-, Polythioether-, Polylacton-, Polycarbonat-, Polyestercarbonat-, Polyethercarbonat-, Polyacetal- und Polyesteramidpolyole zum PU-Aufbau eingesetzt werden. Auch hier ist es besonders günstig, Makropolyole mit einer OH-Funktionalität von zwei zu verwenden.

Als Makropolyamine können die, wie oben bereits beschrieben, aus den Makropolyolen zugänglichen Polyamine eingesetzt werden. Auch hier ist insbesonders günstig, Makrodiamine zu verwenden. Die Verwendung von Makropolyolen ist besonders bevorzugt.

Geeignete Kettenverlängerer sind die in der PU-Chemie üblicherweise verwendeten kurzkettigen, in der Regel gegenüber Isocyanaten difunktionellen Alkohole, Amine und Aminoalkohole. Beispiele für derartige Verbindungen sind Alkohole wie Ethylenglykol, 1,4-Butandiol, 1,6-Hexandiol, Neopentylglykol, Hydrochinon-bis-2-hydroxyethylether, 1,4-Cyclohexandiol, Diethylenglykol, 4,4′-Dihydroxydicyclohexylmethan; Amine wie Ethylendiamin, N,N′-Dimethyl-ethylendiamin, 1,6-Diaminohexan, Isophorondiamin, 4,4′-Diamino-dicyclohexylmethan, N,N′,N˝-Trimethyl-diethylentriamin, Piperazin und Aminoethylpiperazin. Als Aminoalkohole seien beispielsweise Ethanolamin und N-2-Hydroxyethylpiperazin genannt.

Zur Regelung der Molmasse der erfindungsgemäß direkt herstellbaren Polyurethanpulver können auch gegebenenfalls in dem Fachmann bekannter. Weise Kettenregler eingesetzt werden. Hierbei handelt es sich um monofunktionelle Isocyanate, Alkohole und/oder Amine wie beispielsweise Butylisocyanat, Phenylisocyanat, Ethanol, Isopropanol, Decanol oder Dibutylamin, Hexylamin, Morpholin.

Unter weiteren Hilfs- und Zusatzstoffen werden zum einen die dem Fachmann bekannten Katalysatoren der Polyurethanchemie wie beispielsweise Zinn-II-octoat, Dibutylzinndilaurat, Titantetrabutylat, Eisen-II-acetylacetonat, Diazabicyclooctan und N,N-Tetramethylethylendiamin verstanden. Andere Zusatzstoffe sind beispielsweise Füllstoffe und Verstärkungsstoffe wie Glasfasern, C-Fasern, TiO₂, Diatomeenerde, aromatische Polyamide, LC-Polyester auch in gemahlener Form, Quarzmehl und Polyharnstoffe sowie Farbstoffe wie anorganische oder organische Pigmente. Derartige Zusatzstoffe sind in der Kohlenwasserstoffphase unlöslich und werden vorteilhaft vor Ausführung der direkten Polyurethan-Pulversynthese in die eingesetzten Makropolyole eingearbeitet.

Erfindungsgemäß wird die direkte Synthese der PU-Pulver vorzugsweise in einer Kohlenwasserstoffträgerphase in Gegenwart der erfindungsgemäßen Copolymeren durchgeführt. Die Menge der zuzusetzenden Copolymere kann in weiten Grenzen, beispielsweise zwischen 0,05 und 10 %, vorteilhaft 0,5 bis 5 %, bezogen auf das Gesamtgewicht des herzustellenden Polyurethans, schwanken. Besonders günstige Resultate bezüglich Korngröße erhält man, wenn 1 bis 3 % Copolymer verwendet werden.

Als Trägerphase für die erfindungsgemäßen Verfahren werden Kohlenwasserstoffe bevorzugt, wobei die Siedepunkte bzw. Siedebereiche vorzugsweise der gewünschten Reaktionstemperatur entsprechen. Demzufolge können Kohlenwasserstoffe mit Siedepunkten zwischen 40°C und 200°C verwendet werden, normalerweise bevorzugt man einen Siedebereich zwischen 60°C und 150°C, wegen der einfachen Abtrennung und schnellen Trocknung der PU-Pulver sind Siedebereiche der Trägerphase zwischen 80°C und 120°C besonders günstig. Die Kohlenwasserstoffe können als Reinstoffe, aber auch als Gemische eingesetzt werden, am ökonomischsten verwendet man aromatenfreie Benzinfraktionen der angegebenen Siedebereiche.

Bei der erfindungsgemäßen Herstellung von Polyurethanpulvern in einer Kohlenwasserstoff-Trägerphase erhält man die Pulver in Form sedimentierender Suspensionen, aus denen die Produkte beispielsweise durch Filtration abgetrennt werden. Der Feststoffgehalt dieser Suspensionen kann verschieden sein, beispielsweise zwischen 10 und 60 % liegen. Im Interesse einer guten Raum-Zeitausbeute sind höhere Feststoffgehalte günstig, jedoch ist die Pulversynthese bei Feststoffgehalten bis 50 % einfacher durchzuführen. Daher werden Feststoffgehalte von 20 bis 50 % und besonders von 30 bis 40 % bevorzugt.

Die erfindungsgemäße Synthese wird vorzugsweise bei Temperaturen zwischen 40°C und maximal 140°C durchgeführt, bevorzugt wird ein Temperaturintervall zwischen 50°C und 100°C, optimal sind Reaktionstemperaturen zwischen 60°C und 80°C.

Der Aufbau von Polyurethanen in Substanz ist prinzipiell nach verschiedenen Verfahren möglich. Entweder werden alle Komponenten vermischt und zur Reaktion gebracht ("one shot"-Verfahren) oder man stellt zunächst ein Voraddukt aus Makropolyol und Polyisocyanat her, welches in einer zweiten Reaktionsstufe mit dem Kettenverlängerer umgesetzt wird (Prepolymermethode). Es ist bekannt, daß sich so hergestellte Polyurethankunststoffe bei gleicher Bruttozusammensetzung je nach Synthesemethode in ihren anwendungstechnischen Eigenschaften unterscheiden. Erfindungsgemäß sind beide Methoden - oder Varianten davon - zur direkten Herstellung von Polyurethanpulvern in einer Kohlenwasserstoff-Trägerphase geeignet. Man kann beispielsweise Makropolyol und Kettenverlängerer in der Trägerphase emulgieren und dann die gewünschte Polyisocyanatmenge zugeben. Es ist auch möglich, das Polyisocyanat mit Emulgator in der Tragerphase vorzulegen und das Makropolyol vermischt mit dem Kettenverlängerer zuzufügen. Eine erfindungsgemäß besonders bevorzugte Variante dieses "one shot"-Verfahrens besteht darin, daß man Polyisocyanat und grenzflächenaktiven Hilfsstoff in der Trägerphase vorlegt, das System zum Sieden erhitzt und zur siedenden Mischung Makropolyol und Kettenverlängerer - gegebenenfalls vermischt - zutropft. Dadurch wird eine einfache Temperaturkontrolle erreicht. Die gewünschte Reaktionstemperatur kann durch entsprechende Wahl der Trägerphase eingestellt werden.

Andererseits ist es auch möglich, Makropolyol und Polyisocyanat in Substanz zum Prepolymer umzusetzen, danach das Prepolymer mit Hilfe der erfindungsgemäßen grenzflächenaktiven Stoffe in der Trägerphase zu emulgieren und diese Emulsion mit Kettenverlängerern, wie oben beschrieben, umzusetzen.

Schließlich kann man das Prepolymerverfahren auch so durchführen, daß man den Kettenverlängerer zusammen mit den erfindungsgemäßen Hilfsstoffen in der Trägerphase vorlegt und dann das NCO-Prepolymer zugibt.

Erfindungsgemäß wird die direkte Synthese der Polyurethanpulver in Gegenwart der erfindungsgemäßen grenzflächenaktiven Hilfsstoffe durchgeführt. Zwar ist es möglich, mit ein und demselben Hilfsstoff Polyurethanpulver mit unterschiedlicher Makropolyolkomponente herzustellen. So kann man beispielsweise durchaus Polyurethanpulver aus 4,4′-Diisocyanato-diphenylmethan, Butandiol und Butandiol-polyadipat herstellen, wenn man einen Hilfsstoff einsetzt, zu dessen Synthese ein Caprolacton-Polymerisat verwendet wurde. Besonders bevorzugt ist es jedoch, Hilfsstoffe einzusetzen, deren modifizierte Polyolkomponente dem Weichsegmentpolyol des Polyurethans chemisch ähnlich oder mit demselben identisch ist. Dadurch kann die benötigte Menge an Hilfsstoff und/oder die Korngröße des Pulvers minimiert werden.

### Beispiel 1

### Copolymer mit Polycaprolactonkomponente

### A: Caprolactonkomponente

114 g Caprolacton werden entgast und unter N₂ auf 150°C erhitzt. Man gibt 1,29 g Hydroxyethylmethacrylat und eine katalytische Menge Dibutylzinndilaurat zu und rührt 3 Std. bei 150°C. Das Produkt wird in 115 g Toluol gelöst.

### B: Urethankomponente

In 214,4 g Toluol werden 65 g Hydroxyethylmethacrylat gelöst. Man gibt 100 mg Dibutylzinndilaurat zu und tropft bei Raumtemperatur 147,5 g Stearylisocyanat zu. Danach wird auf Rückfluß erhitzt, bis die Lösung NCO-frei ist. 198 g dieser Lösung (= 99 g Urethan) werden mit 100 g Toluol verdünnt und mit 30 mg Dibenzoylperoxid versetzt.

### C: Copolymer

Zur Lösung wird bei 100°C bis 110°C innerhalb 1 Std. die dibenzoylperoxidhaltige Lösung B (= 99 g Urethan) unter N₂ zugetropft. Man rührt 3 Std. bei 110°C nach und entfernt das Lösemittel durch Einengen am Rotationsverdampfer. Es werden 214 g eines hartwachsartigen Produkts erhalten.

50 g dieses Produkts werden in 50 ml Toluol gelöst. Man tropft 25,94 g einer 1 %igen Phenylisocyanatlösung in Toluol zu und rührt 2 Std. bei 40°C. Danach wird das Lösemittel entfernt.
Ausbeute: 50 g.

### Beispiel 2

### Copolymer mit Polyesterkomponente

### A: Polyesterkomponente

112,5 g eines Butandiol-polyadipats (M̅ = 2250) und der OH-Funktionalität 2 werden in 400 g Toluol gelöst. Man gibt 7,9 g Pyridin zu und tropft bei Raumtemperatur 3,14 g Acetylchlorid in 10 ml Toluol zu. Danach wird 1 Std. bei Raumtemperatur gerührt. Nun werden 6,27 g Methacryloylchlorid in 25 ml Toluol zugetropft. Man rührt 1 Std. bei Raumtemperatur und dann 1 Std. unter Rückfluß. Man kühlt ab, saugt vom Pyridinhydrochlorid ab, wäscht die organische Phase mit 2N HCl pyridinfrei, trocknet (CaCl₂ + MgSO₄), filtriert und engt ein. Es werden 118 g Produkt erhalten, die man mit Toluol zu 245 g Lösung verdünnt.

### B: Copolymerisation

Analog Beispiel 1 wird aus Hydroxyethyl-methacrylat und Stearylisocyanat das Urethan hergestellt und in Toluol zusammen mit 30 mg Dibenzoylperoxid gelöst (112,5 g Produkt in 326 g Lösung). Diese Lösung wird innerhalb 1 Std. unter N₂ zu der bei 100°C vorgelegten Lösung A getropft. Man rührt 3 Std. bei 100°C bis 110°C nach und entfernt das Toluol, zuletzt im Hochvakuum bei 110°C bis 120°C. Es wird ein zähflüssiges Öl erhalten, welches beim Abkühlen zu einer hartwachsartigen Masse erstarrt.

### Beispiel 3

### Copolymer mit Polyesterkomponente

Analog Beispiel 2A werden 454 g einer Toluollösung der Polyesterkomponente (= 224 g Produkt) hergestellt. Zu dieser Lösung wird bei 110°C unter N₂ innerhalb 5 Std. eine Lösung von 60 mg Dibenzoylperoxid und 448 g des Stearylurethans aus Beispiel 2B in 752 g Toluol zugetropft. Man rührt 18 Std. bei 110°C nach und engt ein, zuletzt bei 0,1 mbar und 110°C. Die hochviskose Masse wird auf ein Blech gegossen, wo sie erstarrt.
Ausbeute: 664 g.

### Beispiel 4

Analog Beispiel 3 werden 1153 g einer Toluollösung der dort verwendeten Polyesterkomponente hergestellt (Gehalt: 558,37 g Polyesterkomponente). Diese Lösung wird mit 670 g des Stearylurethans aus Beispiel 2B, gelöst in 1252 g Toluol wie in Beispiel 3 umgesetzt. Als Radikalstarter werden vor der Umsetzung 0,179 g Dibenzoylperoxid in der Urethanlösung homogen gelöst.
Nach Aufarbeitung erhält man 1200 g hartwachsartiges Produkt.

### Beispiel 4 A:

Der Hilfsstoff mit gleicher Bruttozusammensetzung wie in Beispiel 4 wird nach einer andersartigen Polymerisationsmethode hergestellt: 279,6 g der Polyesterkomponente und 335,5 g der Urethankomponente werden mit Toluol zu je einem Liter Lösung gelöst. In beide Lösungen werden je 0,054 g Dibenzoylperoxid gegeben. Die so vorbereiteten Lösungen tropft man synchron innerhalb 3 Std. unter Rühren und Rückfluß zu 100 ml vorgelegtem Toluol. Die Polymerisation wird unter Stickstoff durchgeführt. Es wird 12 Std. unter Raumtemperatur nachgerührt. Danach wird das Toluol, zuletzt im Hochvakuum bei 80°C, abdestilliert. Das zähflüssige Produkt wird auf ein Blech gegossen, wo es erstarrt. Es werden 610 g Produkt erhalten.

### Beispiel 5

### Copolymer mit Polyetherkomponente

### A: Polyetherkomponente

25 g eines OH-difunktionellen Polytetrahydrofurans mit M̅ = 1000 und 50 g eines OH-difunktionellen Polytetrahydrofurans mit M̅ = 2000 werden vermischt, bei 15 mbar und 110°C 30 Min. entwässert und danach in 400 g Toluol gelöst. Man gibt 7,9 g Pyridin zu, tropft bei Raumtemperatur 3,14 g Acetylchlorid in 10 ml Toluol zu, rührt 1 Std. nach und tropft dann 6,27 g Methacryloylchlorid in 25 ml Toluol zu. Danach wird 1 Std. unter Rückfluß gekocht, abgekühlt, vom Pyridinhydrochlorid abgenutscht und eingeengt. Der Rückstand wird in Methylenchlorid aufgenommen, mit 2N HCl und H₂O gewaschen, getrocknet, filtriert und eingeengt. Man erhält 71 g endgruppenmodifiziertes Polyethergemisch, das in 115 g Toluol gelöst wird.

### B: Copolymer

Zur Lösung A werden bei 110°C unter N₂ eine Lösung von 30 mg Dibenzoylperoxid und 142 g des Stearylurethans in 143 g Toluol innerhalb 4 Std. zugetropft. Gegen Ende des Zutropfens wird aus Viskositätsgründen mit 400 ml Toluol verdünnt. Es wird 3 Std. bei 110°C nachgerührt und danach eingeengt.
Ausbeute: quantitativ.

### Beispiel 6

In 118,5 g Ligroin eines Siedebereichs um 90°C werden 2,2 g Copolymer aus Beispiel 1 vorgelegt. Bei 65°C werden unter kräftigem Rühren mit einem Blattrührer (1200 Umdrehungen) 50 g eines entwässerten Butandiol-Adipinsäurepolyesters mit M̅ = 2250 und F = 2 sowie 5 g 1,4-Butandiol zugegeben. Danach gibt man 20 g festes 4,4′-Diisocyanato-diphenylmethan zu sowie ∼ 0,1 g Dibutylzinndilaurat. Die Temperatur fällt zuerst etwas und steigt dann kurzzeitig bis auf 90°C an. Man rührt bei 65°C, bis die Trägerphase NCO-frei ist (2 Std.), kühlt, trennt den Feststoff ab und trocknet an der Luft. Es wird ein freifließendes Pulver erhalten.
Ausbeute: 70 g Pulver einer Korngröße < 400 µ.
Siebanalyse: 400 µ < 29,6 % > 200 µ < 61,7 % > 160 µ < 5,36 % > 125 µ < 4,58 % > 80 µ < 0,94 % > 0 µ.
Die Angaben zur Siebanalyse bedeuten jeweils den Massenanteil an Pulver, der nach einstündigem Schütteln auf einer Schüttelmaschine nicht durch das entsprechende Normsieb gemäß DIN 4188 fiel.

### Beispiel 7

Der Ansatz von Beispiel 6 wurde wiederholt mit dem Unterschied, daß 2,2 g Copolymer von Beispiel 2 eingesetzt wurden. Man erhielt 68 g freifließendes Pulver einer Korngröße < 400 µ.
Siebanalyse: 400 µ < 0,9 % > 200 µ < 25,2 % > 160 µ < 45,6 % > 125 µ < 27,74 % > 80 µ < 2,34 % > 0 µ.

### Beispiel 8

### Rezyklisierung der Mutterlauge

Die durch einfaches Absaugen ohne Waschen erhaltene Mutterlauge eines mit Beispiel 7 identischen Versuchs wird nach Auffüllen auf das Anfangsgewicht als Trägerphase für die Wiederholung des Beispiels 7 eingesetzt; mit dem Unterschied, daß kein neues Copolymer hinzugefügt wird. Es resultieren 69 g freifließendes Pulver mit folgender Siebanalyse: 400 µ < 19,72 % > 200 µ < 61,84 % > 160 µ < 9,72 % > 125 µ < 7,64 % > 80 µ < 3,72 % > 0 µ.

### Beispiel 9 (Vergleichsbeispiel mit oberflächenaktiven Mitteln gemäß US-A-4 032 516, Beispiel 2)

Das Beispiel 7 wird wiederholt mit dem Unterschied, daß als Emulgator 2,2 g eines N-Vinyl-pyrrolidon-hexadecencopolymers der mittleren Molmasse 7300 eingesetzt wird. Das erhaltene PU-Pulver ist grobkörniger als in Beispiel 7 und weist folgende Korngrößenverteilung auf:
400 µ < 8,2 % > 200 µ < 84,8 % > 160 µ < 7,2 % > 125 µ < 2 % > 80 µ < 0,4 % > 0 µ.
Die aus Beispiel 9 erhaltene Mutterlauge wurde nach Auffüllen auf das Anfangsgewicht als Trägerphase erneut eingesetzt und der Versuch ohne Zugabe neuen Emulgators wiederholt. Dabei entstand kein Pulver, sondern das Polyurethan fiel als Klumpen aus.

### Beispiel 10

In einem 45 l Rührkessel mit Ankerrührer, Rückflußkühler und heizbarem Tropftrichter werden 2,16 kg 4,4′-Diisocyanato-diphenylmethan vorgelegt und auf 90°C erhitzt. Unter schwachem Rühren werden 0,222 kg Copolymer aus Beispiel 3 zugegeben. Danach läßt man 20,453 kg Ligroin zulaufen, wobei darauf geachtet wird, daß die Innentemperatur 90°C nicht unterschreitet. Man gibt 4,5 g Dibutylzinndilaurat zu und erhitzt auf Rückfluß (92°C). Unter Rückfluß werden bei einer Rührgeschwindigkeit von 250 Umin⁻¹ eine 100°C heiße Mischung aus 1,9125 kg eines OH-difunktionellen Adipinsäure-Butandiol-Polyesters mit M̅ = 2250, 0,3375 kg eines OH-difunktionellen Adipinsäure-Hexandiol-Polyesters mit M̅ = 2000, 0,709 kg 1,4-Butandiol und 0,0171 kg n-Octanol innerhalb 40 Min. zulaufen lassen. Es wird 1,5 Std. unter Rückfluß nachgerührt, dann auf 25°C abgekühlt und das entstandene PU-Pulver von der Trägerphase abgetrennt.
Ausbeute: 5,033 kg freifließendes Pulver mit folgender Korngrößenverteilung:
400 µ < 57,5 % > 200 µ < 14,6 % > 160 µ < 8,1 % > 125 µ < 15,2 % > 80 µ < 4,2 % > 0 µ.

### Beispiel 11

In einem 2 l Reaktionsbecher mit Ankerrührer, Tropftrichter und Rückflußkühler werden 110 g 4,4′-Diisocyanato-diphenylmethan und 13,2 g Copolymer aus Beispiel 5 in 537 g Ligroin vorgelegt. Man erhitzt auf Rückfluß (92°C) und gibt 2 g Dibutylzinndilaurat zu. Dann wird unter Rühren (250 Umin⁻¹) eine heiße (100°C) Mischung aus 100 g Polytetrahydrofuran (OHZ 112, F = 2), 100 g Polytetrahydrofuran (OHZ = 56, F = 2), 26 g 1,4-Butandiol und 1,4 g Carnaubawachs innerhalb 25 Min. zulaufen gelassen. Es wird 1 Std. unter Rückfluß nachgerührt, unter Rühren auf Raumtemperatur gekühlt, vom Pulver abgesaugt und getrocknet.
Ausbeute: 320 g
Siebanalyse: 400 µ < 51,07 % > 200 µ < 48,02 % > 160 µ < 0,8 % > 125 µ < 0,1 % > 80 µ.

### Beispiel 12

Ein Gemisch aus 25 g Polytetrahydrofuran (M̅ = 1000, OHZ = 112) und 25 g Polytetrahydrofuran (M̅ = 2000, OHZ = 56) wird mit 27,5 g 4,4′-Diisocyanato-diphenylmethan zum NCO-Prepolymer umgesetzt. Dieses Prepolymer wird heiß (90°C) zu einer siedenden (92°C) schnellgerührten (1300 Umin⁻¹) Mischung aus 6,5 g 1,4-Butandiol, 3,3 g Copolymer aus Beispiel 5, 0,1 g Dibutylzinndilaurat und 133 g Ligroin innerhalb 30 Min. zugetropft. Es wird 1 Std. unter Rückfluß nachgerührt und danach auf Raumtemperatur abgekühlt. Das entstandene Pulver wird abgenutscht und getrocknet.
Ausbeute: 75 g
Siebanalyse: 400 µ < 68,9 % > 200 µ < 29,6 % > 160 µ < 14,66 % > 125 µ.

### Beispiel 13

In einem Rundkolben mit Blattrührer, Rückflußkühler und Tropftrichter werden 13,2 g Hexamethylendiisocyanat und 3,96 g Copolymer aus Beispiel 4 sowie 0,5 ml Dibutylzinndilaurat in 310 g Ligroin vorgelegt. Unter Rückfluß (92°C) und Rühren (1300 Umin⁻¹) wird ein Gemisch aus 48 g Butandiol-polyadipat (F = 2, OHZ 49,8); 12 g Hexandiol/Neopentylglykol-polyadipat (F = 2, OHZ = 56) und 4,8 g 1,4-Butandiol heiß (100°C) innerhalb 18 Min. zugetropft. Man rührt 2 Std. mit hoher Drehzahl unter Rückfluß nach, dann noch 8 Std. langsam bei 70°C, kühlt ab und saugt vom Pulver ab.
Ausbeute: 75 g
Siebanalyse: 400 µ < 8,68 % > 200 µ < 49,13 % > 160 µ < 36,1 % > 125 µ < 5,68 % > 80 µ < 0,4 % > 0 µ.

### Beispiel 14 (Vergleichsbeispiel)

Der Ansatz von Beispiel 13 wird wiederholt mit dem Unterschied, daß anstelle des dort eingesetzten Copolymeren 3,96 g des Emulgators aus Beispiel 9 verwendet werden. Bereits beim Zutropfen der Polyolmischung bildeten sich Klumpen, der Ansatz blieb aber rührbar. Es wurde wie in Beispiel 13 weitergerührt und aufgearbeitet. Das Produkt war kein Pulver, sondern bestand aus unregelmäßig geformten Klumpen mit Querschnitten bis zu 2 cm.

### Beispiel 15

Wie in Beispiel 12 wird aus 50 g der dort eingesetzten Polytetrahydrofuranmischung und 27,5 g 4,4′-Diisocyanato-diphenylmethan das NCO-Prepolymer hergestellt. Zu diesem Prepolymer werden 3,3 g des in Beispiel 32 verwendeten Copolymeren gegeben. Danach versetzt man langsam unter Rühren bei 92°C mit 333 g Ligroin und gibt noch 0,1 g Dibutylzinndilaurat zu. Unter schnellem Rühren (1300 Umin⁻¹) und Rückfluß (92°C) werden 6,5 g 1,4-Butandiol innerhalb 15 Min zugegeben. Es wird wie in Beispiel 12 nachgerührt und aufgearbeitet.
Ausbeute: 80 g Pulver
Siebanalyse: 400 µ < 71 % > 200 µ < 29 % > 160 µ.

### Beispiel 16

Das Beispiel 6 wird wiederholt mit dem Unterschied, daß 3,3 g Copolymer aus Beispiel 4A verwendet wird.
Ausbeute: 69 g Pulver
Siebanalyse: 400 µ < 43,42 % > 200 µ < 37,79 % > 160 µ < 14,17 % > 125 µ < 4,22 % > 80 µ < 0,4 % > 0 µ.

## Patentansprüche

1. Grenzflächenaktive Copolymere mit im wesentlichen linearer Struktur, erhältlich durch Copolymerisation von
A) einem partiellen Umsetzungsprodukt aus A1) (Meth)acrylsäure bzw. einem Derivat davon und A2) einer makromolekularen Verbindung, die mit wenigstens zwei funktionellen Gruppen, ausgewählt aus OH und NH₂ substituiert ist, wobei die nicht mit A1) umgesetzten funktionellen Gruppen irreversibel blockiert sind
mit
B) einem Urethan aus einem langkettigen Alkylisocyanat B1) und einem Hydroxyalkyl-(meth)acrylsäureester B2).

2. Copolymere nach Anspruch 1, dadurch gekennzeichnet, daß die Verbindung A2) ein Makropolyol, insbesondere ein Makrodiol, ist.

3. Copolymere gemäß Anspruch 1, dadurch gekennzeichnet, daß es sich bei A2) um Polyesterdiole, Polyetherdiole, Polythioetherdiole, Polylactondiole, Polycarbonatdiole, Polyethercarbonatdiole, Polyacetaldiole und Polyamiddiole des Molmassenbereichs 400 bis 10.000 handelt.

4. Copolymere gemäß Anspruch 1, dadurch gekennzeichnet, daß A2) ein Makrodial ist, daß 20 bis 70 %, %, der Hydroxylgruppen von A2) durch Veretherung, Veresterung mit Monocarbonsäure oder Urethanisierung mit monofunktionellen Isocyanaten blockiert sind, die verbleibenden Hydroxylgruppen in (Meth)acrylsäureesterfunktionen überführt sind und die derart modifizierten Makrodiole über diese (Meth)acrylesterfunktionen mit Urethanen B) aus langkettigen monofunktionellen Alkylisocyanaten und Hydroxyalkyl-(methy)acrylaten copolymerisiert sind.

5. Copolymere gemäß Anspruch 1, dadurch gekennzeichnet, daß in B als Komponente B2) Mono(methy)acrylsäureester von - gegebenenfalss verzweigten - aliphatischen C₂ bis C₁₀-Diolen, und als Isocyanatkomponente B1) - gegebenenfalls verzweigte - aliphatische C₆ bis C₃₀-Monoisocyanate, verwendet werden.

6. Copolymere gemäß Anspruch 1, dadurch gekennzeichnet, daß das Gewichtsverhältnis der Komponente A zur Komponente B im Copolymerisat zwischen 0,05 zu 1 und 2 zu 1 liegt.

7. Verfahren zur direkten Herstellung von Polyurethanpulvern in feinverteilter Form durch Umsetzung von Polyisocyanaten isocyanatreaktiven Verbindungen in einer Trägerphase unter Verwendung von grenzflächenaktiven Verbindungen, dadurch gekennzeichnet, daß als grenzflächenaktive Verbidnung ein Copolymer gemäß wenigstens einem der vorhergehenden Ansprüche verwendet wird.

8. Verfahren nach Anspruch 7, dadurch gekennzeichnet, daß als Trägerphase ein aliphatischer und/oder alicyclischer Kohlenwasserstoff verwendet wird und daß man die Synthese in Gegenwart von 0,05 bis 10 % der Copolymeren gemäß Ansprüchen 1-6, bezogen auf das Gesamtgewicht des herzustellenden Polyurethans, ausführt.

9. Verfahren gemäß Anspruch 7, dadurch gekennzeichnet, daß die Trägerphase aus aliphatischen und/oder alicyclischen - gegebenenfalls verzweigten - Kohlenwasserstoffen bzw. Kohlenwasserstoffgemischen mit Siedepunkten von 40°C bis 200°C, besteht.

10. Verfahren gemäß Anspruch 7, dadurch gekennzeichnet, daß jeweils solche grenzflächenaktive Copolymere verwendet werden, bei denen die Verbindung A2) der Makrodiolkomponente des jeweiligen Polyurethans chemisch ähnlich oder mit demselben identisch ist.

## Claims

1. Interfacially active copolymers having a substantially linear structure, obtainable by copolymerization of
A) a partial reaction product of A1) (meth)acrylic acid or a derivative thereof and A2) a macromolecular compound substituted by at least two functional groups selected from OH and NH₂, the functional groups not reacted with A1) being irreversibly blocked,
with
B) a urethane of a long-chain alkyl isocyanate B1) and a hydroxyalkyl (meth)acrylate B2).

2. Copolymers as claimed in claim 1, characterized in that compound A2) is a macropolyol, more especially a macrodiol.

3. Copolymers as claimed in claim 1, characterized in that A2) is a polyester diol, polyether diol, polythioether diol, polylactone diol, polycarbonate diol, polyether carbonate diol, polyacetal diol and polyamide diol having a molecular weight in the range from 400 to 10,000.

4. Copolymers as claimed in claim 1, characterized in that A2) is a macrodiol, 20 to 70% of the hydroxyl groups of A2) are blocked by etherification or esterification with monocarboxylic acids or by urethanization with monofunctional isocyanates, the remaining hydroxyl groups are converted into (meth)acrylate functions and the macrodiols thus modified are copolymerized through these (meth)acrylate functions with urethanes B) of long-chain monofunctional alkyl isocyanates and hydroxyalkyl (meth)acrylates.

5. Copolymers as claimed in claim 1, characterized in that mono(meth)acrylates of optionally branched, aliphatic C₂₋₁₀ diols and optionally branched, aliphatic C₆₋₃₀ monoisocyanates are respectively used as component B2) and isocyanate component B1) in B.

6. Copolymers as claimed in claim 1, characterized in that the ratio by weight of component A to component B in the copolymer is from 0.05:1 to 2:1.

7. A process for the direct production of polyurethane powders in finely divided form by reaction of polyisocyanates and isocyanate-reactive compounds in a carrier phase using interfacially active compounds, characterized in that a copolymer of the type claimed in at least one of the preceding claims is used as the interfacially active compound.

8. A process as claimed in claim 7, characterized in that an aliphatic and/or alicyclic hydrocarbon is used as the carrier phase and in that the synthesis is carried out in the presence of 0.05 to 10% of the copolymers claimed in claims 1 to 6, based on the total weight of the polyurethane to be produced.

9. A process as claimed in claim 7, characterized in that the carrier phase consists of aliphatic and/or alicyclic, optionally branched hydrocarbons or hydrocarbon mixtures having boiling points in the range from 40°C to 200°C.

10. A process as claimed in claim 7, characterized in that interfacially active copolymers, in which compound A2) is chemically similar to or identical with the macrodiol component of the particular polyurethane, are used.

## Revendications

1. Copolymères tensio-actifs à structure principalement linéaire, obtenus par copolymérisation
A) d'un produit de réaction partielle A1) d'acide(méth)acrylique ou d'un dérivé de cet acide et A2) d'un composé macromoléculaire qui est substitué avec au moins deux groupes fonctionnels choisis entre ON et NH₂, les groupes fonctionnels n'ayant pas réagi avec A1) étant bloqués de façon irréversible
avec
B) un uréthanne dérivé d'un alkylisocyanate B1) à longue chaîne et d'un ester d'acide (méth)acrylique d'hydroxyalkyle B2).

2. Copolymères suivant la revendication 1, caractérisés en ce que le composé A2) est un macropolyol, notamment un macrodiol.

3. Copolymères suivant la revendication 1, caractérisés en ce que les composés A2) sont des polyesterdiols, des polyétherdiols, des polythioétherdiols, des polylactonediols, des polycarbonate-diols, des polyéthercarbonate-diols, des polyacétal-diols et des polyamide-diols de masse molaire comprise dans la plage de 400 à 10 000.

4. Copolymères suivant la revendication 1, caractérisés en ce que A2) est un macrodiol, en ce que 20 à 70 % des groupes hydroxyle de A2) sont bloqués par éthérification, estérification avec des acides monocarboxyliques ou transformation en uréthanne avec des isocyanates monofonctionnels, les groupes hydroxyle restants des fonctions ester d'acide (méth)acrylique sont transformés et les macrodiols ainsi modifiés sont copolymérisés par l'intermédiaire de ces fonctions ester d'acide (méth)acrylique avec des uréthannes B) dérives d'alkylisocyanates monofonctionnels à longue chaîne et de (méth)acrylates d'hydroxyalkyle.

5. Copolymères suivant la revendication 1, caractérisés en ce qu'on utilise en B) comme composant B2) un ester d'acide mono(méth)acrylique de diols en C₂ à C₁₀ aliphatiques - éventuellement ramifiés - et comme composant isocyanate B1) des monoisocyanates en C₆ à C₃₀ aliphatiques - éventuellement ramifiés.

6. Copolymères suivant la revendication 1, caractérisés en ce que le rapport en poids du composant A au composant B dans le copolymère se situe entre 0,05:1 et 2:1.

7. Procédé de production directe de polyuréthannes en poudre sous forme finement divisée par réaction de polyisocyanates et de composés réactifs vis-à-vis d'isocyanates dans une phase vectrice avec utilisation de composés tensio-actifs, caractérisé en ce qu'on utilise comme composé tensio-actif un copolymère suivant l'une au moins des revendications précédentes.

8. Procédé suivant la revendication 7, caractérisé en ce qu'on utilise comme phase vectrice un hydrocarbure aliphatique et/ou alicyclique et en ce qu'on exécute la synthèse en présence de 0,05 à 10 % des copolymères suivant les revendications 1 à 6, par rapport au poids total du polyuréthanne à produire.

9. Procédé suivant la revendication 7, caractérisé en ce que la phase vectrice est constituée d'hydrocarbures ou de mélange d'hydrocarbures aliphatiques et/ou alicycliques - éventuellement ramifiés - ayant des points d'ébullition de 40 à 200°C.

10. Procédé suivant la revendication 7, caractérisé en ce qu'on utilise dans chaque cas des copolymères tensio-actifs dans lesquels le composé A2) est chimiquement analogue ou identique au composant macrodiol du polyuréthanne correspondant.
